# EUROPÄISCHE PATENTANMELDUNG

(11) **EP 2 397 656 A1**
(43) Veröffentlichungstag der Anmeldung: **21.12.2011**
(21) Anmeldenummer: 10006147.2
(22) Anmeldetag: 14.06.2010
(51) Int. Cl.: F01D 21/00, F01D 21/04, G01B 7/14, F01D 11/14

(54) **Verfahren zur Einstellung der zwischen Schaufelblattspitzen von Laufschaufeln und einer Kanalwand vorhandenen Radialspalte sowie Vorrichtung zur Messung eines Radialspalts einer axial durchströmbaren Turbomaschine**

(71) Anmelder: SIEMENS AKTIENGESELLSCHAFT, 80333 München (DE)
(72) Erfinder: Buchal, Tobias, 40489 Düsseldorf (DE); Buchholz, Björn, 45470 Mühlheim an der Ruhr (DE); Hille, Thomas, 45468 Mülheim (DE); Kapustina, Anna, 45468 Mülheim (DE); Milazar, Mirko, 46049 Oberhausen (DE); Schwerin, Eric, 47877 Willich-Schiefbahn (DE)

(57) **Zusammenfassung**

Die Erfindung betrifft eine Vorrichtung zur Erfassung und ein Verfahren zur Einstellung von zwischen Schaufelblattspitzen (14) von Laufschaufeln (12) und einer Kanalwand (16) vorhandenen Radialspalte (R) einer Turbomaschine (10, 30) bei der Montage der Turbomaschine (10, 30), bei dem vor der Inbetriebnahme der Turbomaschine (10, 30) die Radialspalte (R) erfasst werden und die den Radialspalt (R) bildenden Bauteile so zueinander fest angeordnet werden, dass ein vorbestimmter zulässiger Radialspalt eingestellt ist.

## Beschreibung

Die Erfindung betrifft ein Verfahren zur Einstellung der zwischen Schaufelblattspitzen von Laufschaufeln und einer Kanalwand vorhandenen Radialspalte von axial durchströmbaren Turbomaschinen, wobei die Einstellung der Radialspalte in Abhängigkeit von zumindest einem gemessenen Spaltmaß eines der vorhandenen Radialspalte erfolgt. Weiter betrifft die Erfindung eine Vorrichtung zur Messung zumindest eines Radialspaltes einer axial durchströmbaren Turbomaschine, umfassend eine Turbomaschine mit am Rotor angeordneten Laufschaufeln, deren Schaufelblattspitzen einer den ringförmigen Strömungspfad der Turbomaschine radial außen begrenzenden Kanalwand jeweils radialspaltbildend gegenüber liegen, wobei zumindest ein Sensor zur Erfassung zumindest eines der Radialspalte vorgesehen ist.

Ein derartiges Verfahren und eine derartige Vorrichtung sind beispielsweise aus der US 4,804,905 bekannt. Dazu ist in einem den Strömungspfad begrenzenden Gehäuse der Turbine ein kapazitiver Sensor angeordnet, der im Betrieb der Gasturbine für jede vorbeilaufende Laufschaufel den Abstand zur Schaufelblattspitze erfassen kann. Sofern ein zu großer Radialspalt erfasst wird, wird zu dessen Verkleinerung das konische Gehäuse mit Hilfe von hydraulischen Aktuatoren axial verschoben. Nachteilig ist jedoch, dass je Sensor nur ein Messpunkt auf dem Umfang des Gehäuses erfasst werden kann, so dass mindestens vier Sensoren je Stufe erforderlich sind. Auch bei der Verwendung von vier Sensoren kann dann nur eine grobe Aussage über die Spaltverteilung auf dem Umfang gemacht werden. So z. B. kann der Spalt zwischen den Messpunkten nur interpoliert oder geschätzt werden. Weiterer Nachteil der genannten Lösung ist, dass die Konstruktion wegen der zuverlässigen Befestigung der Sensoren vergleichsweise aufwändig und teuer ist, da die Erfassung der Radialspalte während des Betriebs der Gasturbine erfolgt und eine Kühlung der Sensoren erforderlich ist, damit diese den währenddessen auftretenden Temperaturen dauerhaft standhalten können.

Aufgabe der Erfindung ist daher die Angabe eines Verfahrens und die Bereitstellung einer Vorrichtung, mittels denen mit äußerst geringen Mitteln eine Radialspaltmessung auf dem gesamten Umfang des Gehäuses ermöglicht wird, so dass ein vergleichsweise kleiner Radialspalt zwischen Schaufelblattspitzen von Laufschaufeln und der diesen gegenüberliegenden Kanalwand zur Erzielung eines verbesserten Wirkungsgrades der Turbomaschine erzielt werden kann. Weitere Aufgabe der Erfindung ist es, ein effizientes Verfahren zum Einstellen der Radialspalte bei der Montage der Turbomaschine anzugeben.

Die auf das Verfahren gerichtete Aufgabe wird gelöst, indem der Rotor der Turbomaschine außerhalb des Betriebs mit einer Drehzahl unterhalb der Nenndrehzahl z. B. mit Hilfe einer externen Drehvorrichtung angetrieben wird und die Messung währenddessen stattfindet. Das Verfahren ist dabei äußerst vorteilhaft für Messung und Einstellung der erforderlichen Spalte bei der Montage der Turbomaschinen, bei denen eine Spaltmessung in komplett zusammengebautem Zustand erforderlich ist und kein Zugang von Außen oder keine Vorrichtung zur stetigen Radialspalteinstellung vorhanden ist.

Nach dem Stand der Technik erfolgt die Radialspalteinstellung derartiger Turbomaschinen während jeder Montage, indem beispielsweise mit Hilfe von dünnlagigen Blechen - auch als Beilagen bekannt - die relative Position von Kanalwand und Laufschaufelspitze vor der Inbetriebnahme der Turbomaschine eingestellt wird. Das Verfahren ermöglicht nun, die Turbomaschine mit möglichst genauen vorbestimmten Radialspalten zu montieren, die ansonsten aufgrund der herstellungsbedingten Toleranzen tatsächlich größer ausgefallen wären. Vorzugsweise wird das Verfahren zur Messung des Radialspaltes auch bei einer Turbomaschine angewendet, welche als Turbine, als Gasturbine oder als Verdichter ausgestaltet ist.

Unter dem Betrieb der Turbomaschine wird dabei verstanden, dass diese währenddessen bestimmungsgemäß eingesetzt wird. Wenn die Messung der Radialspalte außerhalb des Betriebs der Gasturbine bzw. Turbomaschine durchgeführt wird, heißt dies im Detail, dass, wenn die Turbomaschine beispielsweise als Turbine oder Gasturbine ausgestaltet ist, kein heißes Arbeitsmedium durch deren Strömungspfad strömt. Für einen Verdichter bedeutet dies, dass die im Betrieb auftretenden Temperaturen weit unterschritten werden. In der Regel erfolgt die erforderliche Spaltmessung bei Raumtemperatur, so dass die verwendeten Sensoren keine besondere Resistenz bezüglich Temperatur (Temperatur bis zu 80°C) aufweisen müssen.

Beispielsweise betragen die Nenndrehzahlen von zur Stromerzeugung vorgesehenen Gasturbinen 3000 min⁻1 (bei 50 Hz Netzfrequenz) oder 3600 min⁻1 (bei 60 Hz Netzfrequenz). Gemäß dem erfindungsgemäßen Verfahren ist vorgesehen, dass die Rotor Drehgeschwindigkeit (Rotordrehzahl) wesentlich kleiner ist als die Nenndrehzahl der Turbomaschine. Vorzugsweise kann die Drehzahl über einer so genannten Schaufel-Klapperdrehzahl gewählt werden, so dass die Schaufeln beim Messen ihre Betriebsposition erreichen. Hierdurch können funktionale Störungsparameter beim Messen der Spalte (wie z. B. das Klappern von bei geringer Drehzahl eher lose sitzenden Laufschaufeln) vermieden werden, so dass tatsächliche Funktionsspalte ermittelt werden können. Die Drehzahl kann 120 min⁻1 oder auch weniger betragen. Eine höhere Drehzahl als 120 min-1 ist dennoch nicht ausgeschlossen.

Dies ermöglicht den Einsatz besonders preisgünstiger Sensoren mit einer vergleichsweise geringen zeitlichen Auflösung.

Die auf die Vorrichtung gerichtete Aufgabe wird mit einer solchen gelöst, welche gemäß den Merkmalen des Anspruchs 5 ausgestaltet ist. Erfindungsgemäß ist vorgesehen, dass - bezogen auf die im Betrieb der Turbomaschine im Bereich des Sensors auftretende Betriebstemperatur - der zumindest eine Sensor temperaturunbeständig ist. Mit anderen Worten: Die Betriebstemperatur der Turbomaschine liegt über der maximal zulässigen Betriebstemperatur des Sensors.

Die Erfindung geht von der Erkenntnis aus, dass eine Temperaturbeständigkeit des Sensors nicht erforderlich ist, da die Radialspalte der Turbomaschine nicht online, d. h. während des Betriebes der Turbomaschine stetig gemessen und eingestellt werden, sondern nur jeweils einmalig bei der Montage der Turbomaschine z.B. bei Neubau oder nach Revision. Zur einmaligen Einstellung der Radialspalte bei der Montage können die Kanalwände bzw. das Gehäuse des Strömungspfads der Turbomaschine und die Spitzen der Schaufelblätter der Laufschaufeln in unterschiedlichen Positionen zueinander angeordnet werden, wobei die Positionierung beispielsweise mit Hilfe von Beilagen unterschiedlicher Dicke oder entsprechend verstellbaren Führungssystemen erfolgt. Da die Radialspalte der Turbomaschine nur bei der Erstmontage bzw. nach jeder durchgeführten Wartung der Turbomaschine erneut eingestellt werden müssen, reicht es aus, dass die für diesen Zweck eingesetzten Sensoren lediglich eine Beständigkeit für die Raumtemperatur aufweisen, nicht aber eine Beständigkeit gegen die im Betrieb der Turbomaschine an der Messstelle auftretenden Temperaturen.

Ein besonderer Vorteil der Erfindung liegt darin, dass derartige Sensoren mittlerweile auch in Ausfertigungsformen verfügbar sind, deren Material bei Überschreiten einer Grenztemperatur sich in hauptsächlich staubteilchengroße Partikel zerlegen. Somit können nach der Messung der Radialspalte die verwendeten Sensoren innerhalb der Turbomaschine verbleiben und müssen nicht von einem Monteur entfernt werden. Dies spart Montagekosten und verringert die Fertigungs- bzw. Stillstandzeiten der Turbomaschine. Die Zerlegung in staubteilchengroße Partikel tritt dann beispielsweise bei der ersten Inbetriebnahme der Turbomaschine auf, da in diesem Fall die dann auftretenden Kräfte und die Temperaturen weit oberhalb der Einsatzbedingungen und Temperaturen des Sensors liegen und diesen dadurch zersetzend zerstören. Die Partikel werden dann mit dem Medium aus der Turbomaschine getragen.

Ein weiterer wesentlicher Vorteil ist, dass die Sensoren nicht in die Komponenten z.B. Laufschaufeln eingebettet werden müssen. Vielmehr können die Sensoren unabhängig von ihrer Größe an der Oberfläche der Laufschaufel angebracht und befestigt werden, da während ihres Einsatzes die Turbomaschine nicht bestimmungsgemäß betrieben wird.

Das vorgeschlagene Verfahren und die vorgeschlagene Vorrichtung sind insbesondere für diejenigen Schaufelkränze von Vorteil, bei denen aufgrund der axialen Bauweise der Turbomaschine eine Zugänglichkeit für den Monteur nicht gegeben oder sehr schwierig ist. Folglich kann zumindest eine Schaufel jedes Schaufelkranzes der Turbomaschine mit einem Sensor ausgestattet werden, wodurch für jeden Schaufelkranz das Spaltmaß der Radialspalte des gesamten Umfangs (360°) ermittelt werden können kann. Es muss sich nicht auf wenige Messstellen reduzieren werden.

Ein weiterer Vorteil der Erfindung liegt darin, dass die Sensoren nicht verschleißresistent sein müssen. Prinzipiell ist es ausreichend, wenn der Sensor lediglich für eine geringe Anzahl an Umläufen das Spaltmaß ermitteln kann und die gewünschte Spalteinstellung damit sicherstellt.

Vorzugsweise ist der Sensor an einer Laufschaufel angeordnet. Hierdurch kann der betreffende Radialspalt für den gesamten Umlauf erfasst werden, wodurch auch eine genauere Angabe der Rotorposition innerhalb des Gehäuses möglich ist. Mit anderen Worten: für jede Winkelposition des Sensors (auf dem Umfang) kann ein Spaltmaß des Radialspalts erfasst werden. Vorzugsweise ist der Sensor als RFID-Sensor ausgebildet, wodurch eine kabellose Funk-Übertragung der erfassten Radialspalte der Gasturbine beziehungsweise der die Radialspalte repräsentierenden Messwerte zu einer stationären Auswerteeinheit möglich ist.

Selbstverständlich kann die erfindungsgemäße Idee auch außerhalb des Gebiets von Turbomaschine eingesetzt werden, beispielsweise bei einem elektrischen Generator, dessen Radialspalt zwischen Stator und Rotor nach Möglichkeit ebenfalls klein sein sollten. Unabhängig davon ist auch denkbar, dass Verfahren beziehungsweise die Vorrichtung zur Axialspaltbestimmung einzusetzen.

Insgesamt gibt die Erfindung eine Vorrichtung zur Erfassung und ein Verfahren zur Einstellung von zwischen Schaufelblattspitzen von Laufschaufeln und einer Kanalwand vorhandenen Radialspalte einer Turbomaschine bei der Montage der Turbomaschine an, bei dem vor der Inbetriebnahme der Turbomaschine die Radialspalte erfasst werden und die den Radialspalt bildenden Bauteile so zueinander fest angeordnet werden, dass ein vorbestimmter zulässiger Radialspalt in der Montage eingestellt wird. Eine Online-Radialspalt-Minimierung im Sinne einer während des Betriebs der Turbomaschine stetigen Einstellung ist nicht vorgesehen.

Die Erfindung wird anhand von nachfolgenden Figuren näher erläutert. Es zeigen:
- FIG 1, FIG 2: einen Längs- und Querschnitt durch den Strömungspfad eines Verdichters und
- FIG 3, FIG 4: den Längs- und Querschnitt durch den Strömungspfad einer Turbine.

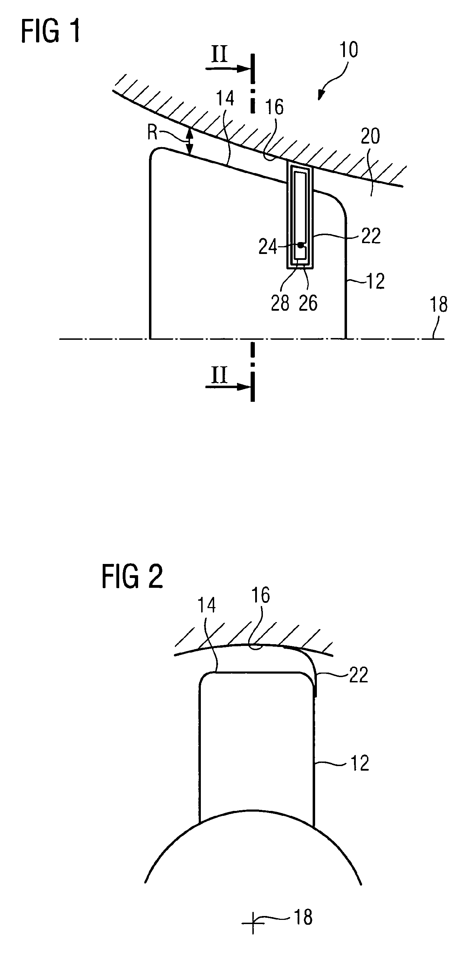

FIG 1 zeigt den Längsschnitt durch einen Ausschnitt eines Verdichters 10. Der Verdichter 10 gehört zu den axial durchströmbaren Turbomaschinen und weist an einem nicht weiter dargestellten Rotor strahlenartig zu einem Kranz angeordnete Laufschaufeln 12 auf. Die Laufschaufeln 12 sind freistehend mit einer Schaufelblattspitze 14 ausgebildet, welche einer Kanalwand 16 radialspaltbildend gegenüber liegt. Die Kanalwand 16 ist konzentrisch zur Maschinenachse 18 ausgebildet und begrenzt radial außen einen Strömungspfad 20 des Verdichters 10, in welchen das zu verdichtende Medium durch den Verdichter 10 gefördert wird. Die Kanalwand 16 ist dabei im Wesentlichen konvergent ausgebildet. An dem Schaufelblatt der Laufschaufel 12 ist spitzenseitig ein Sensor 22 vorgesehen. Der Sensor 22 umfasst dabei eine Sende- und Empfangseinheit 24, welche beispielsweise auf einer Folie 26 angeordnet ist. Ferner ist auf der Folie 26 eine elektrisch leitende Leiterbahn 28 aufgebracht, welche mit der Sende-/Empfangseinheit 24 elektrisch verbunden. Der Sensor 22 ragt dabei über die Spitze 14 der Laufschaufel 12 hinaus und liegt dabei an der Kanalwand 16 an. Wie im Querschnitt nach FIG 2 dargestellt, wird der Sensor 22 und insbesondere dessen elektrischer Leiter 28 in Tangentialrichtung umgebogen, wobei die Biegung des Leiters 28 vom Abstand zwischen der Schaufelspitze 14 und der Kanalwand 16 abhängt. Der Grad der Biegung des elektrischen Leiters 28 führt zu einer Änderung seiner elektrischen Eigenschaften. Diese elektrische Eigenschaft oder ein davon abhängiger Wert wird von der Sende- und Empfangseinheit 24 erfasst. Deren Größe dient dann als Maß für den Radialspalt R. Die vom Sensor 22 erfasste Biegung des elektrischen Leiters 28 wird somit in eine elektrische Größe umgewandelt werden, welche der Sensor 22 mit Hilfe der Sende-/Empfangseinheit 24 an eine nicht dargestellte, stationär angeordnete Auswerte-und Empfangseinheit überträgt. Die Energieversorgung des Sensors 22 kann dabei auch über die Sende-/Empfangseinheit 24 erfolgen, wie es bei RFID-Sensoren üblich ist. Mithilfe des so erfassten Spaltsmaßes kann die relative Position der Kanalwand zur Laufschaufelblattspitze mithilfe der erwähnten Beilagen oder eines Einstellsystems dann so einstellt werden, dass eine gewünschte Spaltverteilung auf dem gesamten Umfang (360°) eingestellt werden kann.

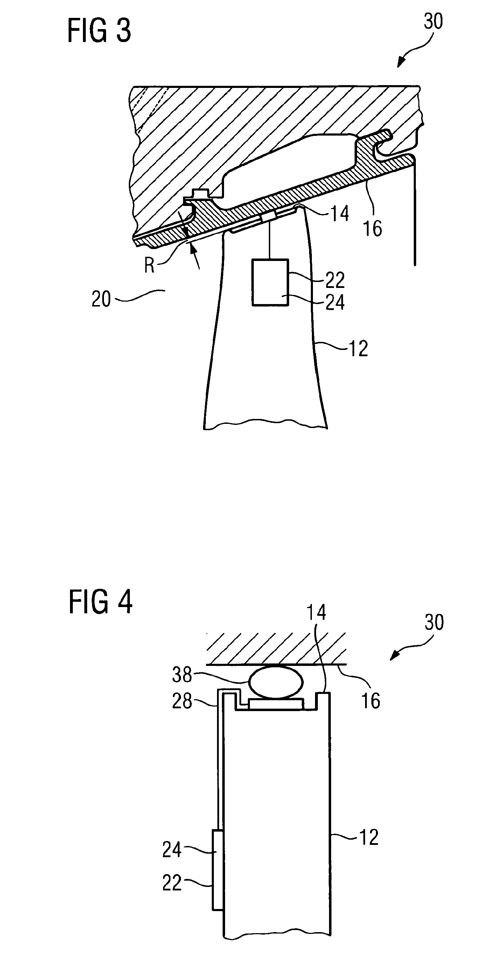

Eine alternative Ausgestaltung der Erfindung ist in FIG 3 und 4 gezeigt, wobei FIG 3 den Längsschnitt durch eine als Turbine 30 ausgebildete Turbomaschine zeigt und FIG 4 den entsprechenden Querschnitt dazu. Dabei sind einander entsprechende Bauteile des Verdichters 10 und der Turbine 30 mit identischen Bezugszeichen versehen. Entsprechend der in FIG 1 und FIG 2 beschriebenen ersten Ausgestaltung weist der Sensor 22 gemäß der zweiten Ausgestaltung, gezeigt in FIG 3 und FIG 4, eine auf einer Kunststofffolie aufgedampfte Leiterbahn 28 auf. Gemäß der zweiten Ausgestaltung ist jedoch die Kunststofffolie auch als Schlaufe 38 ausgebildet, wobei der elektrische Widerstand der darauf aufgedampften Leiterbahn 28 infolge ihrer Stauchung/Verbiegung sich ändert. Die Änderung des Widerstands ist dann erneut ein Maß für den Abstand R zwischen der Schaufelblattspitze 14 und der ihr gegenüberliegenden Kanalwand 16. Die vom Sensor 22 erfassten Spaltmaße bzw. die die Spaltmaße repräsentierenden elektrischen Spannungswerte sind mit Hilfe einer im Sensor 22 integrierten Antenne 24 auf eine nicht dargestellte, externe, statisch angeordnete Empfangs-, Auswerte- und Anzeigevorrichtung ausstrahlbar.

Die Energieversorgung des Sensors 22 kann dabei über eine eingebaute Mikro-Batterie oder durch die Verformung des Sensors 22 selber erzeugt werden. Auch ist in dieser Ausgestaltung möglich, die aus der RFID-Technik bekannte Einspeisemöglichkeit von elektrischer Energie zu verwenden.

Die Antenne 24 des Sensors 22 ist entweder auf der Saugseite oder auf der Druckseite der Laufschaufeln 12 aufgeklebt, um eine möglichst gute direkte Abstrahlung der Antenne 24 zu gewährleisten.

Mit beiden vorgenannten Ausgestaltungen ist es möglich, eine kontinuierliche Erfassung und Übermittlung der Messergebnisse, d. h. die das Spaltmaß der Radialspalte R repräsentierende physikalische Größe an die externe Auswerte- und Anzeigevorrichtung zu übermitteln. Folglich ist es möglich, während der Montage oder Endkontrolle der Turbomaschine 10, 30 - also nur im kalten Zustand und unter sehr geringer Fliehkrafteinwirkung - das Spaltmaß der Radialspalte R zwischen den Spitzen 14 der Laufschaufeln 12 und der äußeren Wand 16 des Strömungspfades mit Hilfe der vorgeschlagenen In-Situ-Sensoren 22 zu erfassen. Da die Turbomaschine 10, 30 ohnehin keine Vorrichtung zur stetigen Radialspalteinstellung aufweist, müssen die verwendeten Sensoren 22 dementsprechend nicht denjenigen Temperaturen standhalten können, die im Betrieb der Turbomaschine an 10, 30 den entsprechenden Orten, an denen sie angebracht sind, üblicherweise auftreten.

## Patentansprüche

1. Verfahren zur Messung und Einstellung der Spalte zwischen einem Rotor und einem Stator einer Maschine, insbesondere zwischen Schaufelblattspitzen (14) von Laufschaufeln (12) und einer Kanalwand (16) vorhandenen Radialspalte (R) von axial durchströmbaren Turbomaschinen (10, 30) mit einem Rotor,
wobei die Einstellung der Spalte (R) in Abhängigkeit von zumindest einem gemessenen Spaltmaß eines der vorhandenen Spalte (R) erfolgt,
**dadurch gekennzeichnet, dass**
der Rotor außerhalb des Betriebs der Maschine (10, 30) mit einer Drehzahl unterhalb der Nenndrehzahl antrieben wird und die Messung währenddessen stattfindet.

2. Verfahren nach Anspruch 1,
angewendet zur Messung des Spaltmaßes des zumindest einen Radialspaltes (R) in einer Turbine (30) und/oder in einem Verdichter (10).

3. Verfahren nach Anspruch 1 oder 2,
welches vor der Erstinbetriebnahme der Turbomaschine (10, 30) und/oder vor der ersten Inbetriebnahme der Turbomaschine (10, 30) nach einer Wartung durchgeführt wird.

4. Verfahren nach Anspruch 1 oder 2,
bei dem die Rotordrehzahl in der Regel kleiner als 120 min-1 ist.

5. Vorrichtung zur Messung zumindest eines Spaltes einer Maschine, insbesondere eines Radialspaltes (R) einer axial durchströmbaren Turbomaschine (10, 30),
umfassend eine Maschine (10, 30) mit am Rotor angeordneten Laufschaufeln (12), deren Spitzen (14) einer den ringförmigen Strömungspfad (20) der Turbomaschine (10, 30) radial außen begrenzenden Kanalwand (16) jeweils radialspaltbildend gegenüberliegen,
wobei zumindest ein Sensor (22) zur Erfassung zumindest eines der Radialspalte (R) vorgesehen ist,
**dadurch gekennzeichnet,**
**dass** - bezogen auf die im Betrieb der Maschine (10, 30) im Bereich des Sensors (22) auftretende Betriebstemperatur - der zumindest eine Sensor (22) temperaturunbeständig ist.

6. Vorrichtung nach Anspruch 4,
bei der der Sensor (22) als RFID-Sensor ausgebildet ist.

7. Vorrichtung nach Anspruch 3 oder 4,
bei der der Sensor (22) an der Laufschaufel (12) angeordnet ist.
